(19) Europäisches Patentamt
European Patent Office
Office européen des brevets

(11) **EP 2 673 503 B1**

## (12) EUROPÄISCHE PATENTSCHRIFT

(45) Veröffentlichungstag und Bekanntmachung des Hinweises auf die Patenterteilung:
**12.10.2016 Patentblatt 2016/41**

(21) Anmeldenummer: **12704037.6**

(22) Anmeldetag: **08.02.2012**

(51) Int Cl.:
**F03D 80/00** (2016.01)    **F03D 17/00** (2016.01)

(86) Internationale Anmeldenummer:
**PCT/EP2012/052098**

(87) Internationale Veröffentlichungsnummer:
**WO 2012/107469 (16.08.2012 Gazette 2012/33)**

(54) **VERFAHREN ZUM BESTIMMEN ENTGANGENER ENERGIE**

METHOD FOR DETERMINING LOST ENERGY PRODUCTION

PROCÉDÉ POUR DÉTERMINER D'ÉNERGIE PERDUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA**

(30) Priorität: **08.02.2011 DE 102011003799**

(43) Veröffentlichungstag der Anmeldung:
**18.12.2013 Patentblatt 2013/51**

(73) Patentinhaber: **Wobben Properties GmbH**
**26607 Aurich (DE)**

(72) Erfinder:
• **BOHLEN, Werner Hinrich**
**26723 Emden (DE)**
• **BRAGA, Nuno**
**P-4450-240 Matosinhos (PT)**
• **SCHMITZ, Andreas**
**P-4450-349 Leca da Palmeira (PT)**

(74) Vertreter: **Eisenführ Speiser**
**Patentanwälte Rechtsanwälte PartGmbB**
**Postfach 10 60 78**
**28060 Bremen (DE)**

(56) Entgegenhaltungen:
EP-A2- 2 169 218        EP-A2- 2 206 917
DE-A1-102004 057 320    US-A1- 2008 079 263

**Beschreibung**

Die vorliegende Erfindung betrifft ein Verfahren zum Bestimmen entgangener Energie, die eine Windenergieanlage während eines Stillstands oder einer Drosselung nicht aus dem Wind entnehmen kann, die sie aber ohne Stillstand oder Drosselung hätte entnehmen können. Außerdem betrifft die Erfindung das Aufnehmen von Daten, die zum Bestimmen der genannten entgangenen Energie eingesetzt werden können. Außerdem betrifft die vorliegende Erfindung eine Windenergieanlage, bei der eine solche entgangene Energie bestimmt werden kann. Ferner betrifft die vorliegende Erfindung einen Windpark, in dem zumindest die entgangene Energie einer Windenergieanlage bestimmt werden kann.

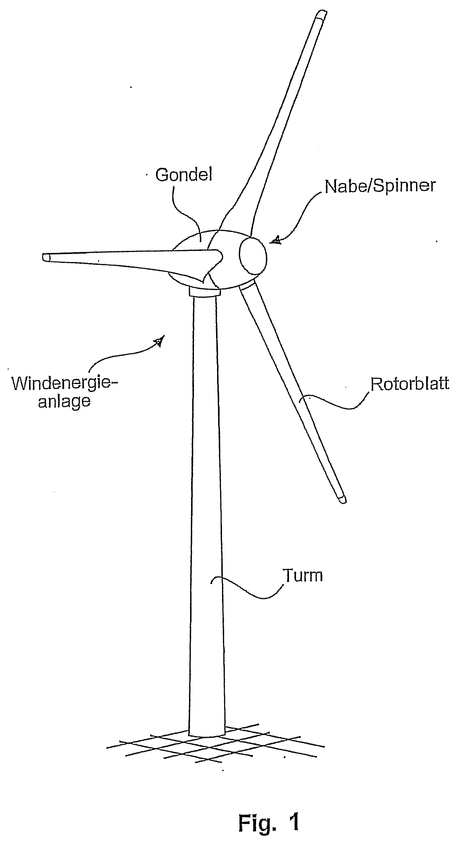

Windenergieanlagen sind allgemein bekannt. Sie umfassen beispielsweise einen Turm mit einer darauf angeordneten Gondel, die einen Rotor mit Rotorblättern umfasst, die an einer Nabel bzw. einem Spinner angeordnet sind, wie dies in der Figur 1 in einem Beispiel dargestellt ist. Der Rotor, der im Wesentlichen die Rotorblätter und den Spinner umfasst, wird durch den vorherrschenden Wind in Drehung versetzt und treibt dadurch einen Generator an, der diese Bewegungsenergie in elektrische Energie bzw. bezogen auf einen momentanen Wert in elektrische Leistung umwandelt. Diese elektrische Leistung bzw. elektrische Energie wird üblicherweise in ein elektrisches Versorgungsnetz eingespeist und steht entsprechend Verbrauchern zur Verfügung. Oftmals werden mehrere solcher oder anderer Windenergieanlagen benachbart zueinander aufgestellt und können so einen Windpark bilden. Dabei können die Windenergieanlagen beispielsweise einige hundert Meter entfernt von einander aufgestellt sein. Ein Windpark zeichnet sich dabei üblicherweise, aber nicht notwendigerweise, durch einen gemeinsamen Einspeisepunkt aus. Hierdurch kann die gesamte jeweils erzeugte Leistung des Windparks, also die Summe aller Windenergieanlagen des Windparks zentral an einer Stelle, nämlich dem Einspeisepunkt in das elektrische Netzwerk eingespeist werden.

Gelegentlich kann es vorkommen, dass eine Windenergieanlage angehalten oder gedrosselt wird, obwohl die Windverhältnisse einen Betrieb der Windenergieanlage, insbesondere einen ungedrosselten Betrieb der Windenergieanlage zulassen. Ein solches Anhalten der Windenergieanlage kann beispielsweise bei Wartungsarbeiten oder bei Störungen notwendig sein. Es kann auch vorkommen, dass zur Steuerung des Versorgungsnetzes der Netzbetreiber, der das Versorgungsnetz betreibt, einer Windenergieanlage vorschreibt, für einen bestimmten Zeitraum eine gedrosselte oder gar keine Leistung einzuspeisen. Ein gedrosselter Betrieb kommt beispielsweise auch aus Immissionsschutzgründen in Betracht, insbesondere zur Begrenzung von Schallimmissionen durch einen schallreduzierten Betrieb, oder zum Vermeiden oder Reduzieren eines Schattenschlags. Weitere mögliche Beispiele für eine Reduzierung sind Vorgaben des Netzbetreibers, Eisansatz oder eine Reduzierung oder Abschaltung beim Begehen der Anlage. Grundsätzlich können Reduzierungen bzw. Abschaltungen aus Sicherheitsgründen relevant werden, wie z.B. bei Gefahr von Eisfall, und/oder aus Immissionsschutzgründen, wie bspw. zur Schallreduzierung, und/oder aus internen technischen Gründen wie bspw. bei einer Temperaturüberhöhung, und/oder aus externen technischen Gründen, wie bspw. bei Überspannung im angeschlossenen Versorgungsnetz, oder wenn sich bspw. die Aerodynamik wegen Eisansatzes verringert.

Insbesondere das Anhalten der Windenergieanlage ist regelmäßig von dem Betreiber der Windenergieanlage unerwünscht, weil ihm hierbei Vergütungsausfälle durch Nichteinspeisung elektrischer Energie in das Versorgungsnetz entstehen. Je nach Grund der Abschaltung bzw. Reduzierung kann ein Vergütungsanspruch für die entgangene Energie gegenüber einem Dritten wie beispielsweise dem Netzbetreiber entstehen. Es ist daher von Bedeutung, diese entgangene Energie, die im Grunde einen fiktiven Wert darstellt, zu bestimmen. Dabei ist es wünschenswert, dass diese Energiemenge so genau wie möglich bestimmt wird, da anderenfalls die resultierende Vergütung nicht genau bestimmt werden kann und der Betreiber der Windenergieanlage benachteiligt oder bevorteilt werden würde.

Die Erfassung solcher entgangener Energie wird auch als produktionsbasierte Verfügbarkeit oder energetische Verfügbarkeit bezeichnet, die üblicherweise als prozentualer Wert angegeben wird, bezogen auf die Energie, die ohne Ausfall hätte erzeugt werden können. Dieser Begriff wird auch in Abgrenzung zu dem Begriff der zeitbasierten Verfügbarkeit verwendet, die lediglich den Zeitraum - beispielsweise prozentual bezogen auf ein gesamtes Jahr- angibt, in der die Windenergieanlage angehalten und damit nicht verfügbar war.

Zur Bestimmung der produktionsbasierten Verfügbarkeit, bzw. zur Bestimmung der entgangenen Energie zu dessen Berechnung, kann beispielsweise die Betriebskennlinie der betreffenden Windenergieanlage zugrunde gelegt werden. Die Betriebskennlinie gibt die erzeugte Leistung in Abhängigkeit der Windgeschwindigkeit an. Wird die Windenergieanlage angehalten oder gedrosselt, so kann aufgrund der vorherrschenden und aufgrund einer Messung bekannten Windgeschwindigkeit aus dieser Leistungskennlinie die zugeordnete Leistung abgelesen werden, die die Windenergieanlage gemäß dieser Leistungskennlinie abgegeben hätte. Problematisch ist hierbei insbesondere, dass es schwierig ist, die vorherrschende Windgeschwindigkeit verlässlich und genau zu erfassen. Zwar weisen Windenergieanlagen üblicherweise ein Windmessgerät auf, wie beispielsweise ein Anemometer, tatsächlich wird ein solches regelmäßig aber nicht bzw. nur sehr eingeschränkt zum Steuern der Windenergieanlage verwendet. Es wird der Betriebspunkt einer Windenergieanlage beispielsweise regelmäßig abhängig von einer Rotordrehzahl oder der Rotorbeschleunigung eingestellt, falls die Windenergieanlage über ein drehzahlvariables Konzept verfügt bzw. eine drehzahlvariable Windenergieanlage ist. Mit anderen Worten ist die Windenergieanlage bzw. ihr Rotor der einzige verlässliche Windmesssensor, der aber im Stillstand keinen Aufschluss über die Windgeschwindigkeit geben kann.

Eine andere Möglichkeit wäre, einen Messmast zum Messen der Windgeschwindigkeit zu verwenden, um entweder die damit gemessene Windgeschwindigkeit zu verwenden und über die genannte Leistungskennlinie die Leistung zu bestimmen, die laut Kennlinie hätte erzeugt werden können. Aber auch hierbei ist eine Unsicherheit die Genauigkeit des Messmastes. Hinzu kommt, dass der Messmast von der betreffenden Windenergieanlage beabstandet aufgestellt ist und hierdurch Verfälschungen zwischen der Windgeschwindigkeit am Messmast und derjenigen an der betreffenden Windenergieanlage entstehen. Es kommt hinzu, dass die Windgeschwindigkeit, obwohl nur diese in besagter Leistungskennlinie berücksichtig wird, den Wind nicht ausreichend charakterisieren kann. So kann der Wind beispielsweise für einen - rechnerischen - Mittelwert abhängig davon, ob er sehr gleichmäßig oder sehr böig ist, zu unterschiedlichen Wirkungen an der Windenergieanlage und entsprechend zu unterschiedlicher Leistungsgenerierung führen.

Es wurde auch schon vorgeschlagen, einen Messmast oder einen sogenannten Meteo-Mast mit einer oder mehreren Wetterstationen zu korrelieren, um hierdurch Informationen zur vorherrschenden Wetterlage, insbesondere zum vorherrschenden Wind zu verbessern. Insbesondere werden die Messungen des Meteo-Mastes hierdurch weniger anfällig auf lokale Windschwankungen.

Das Dokument US 2008/0079263 A1 betrifft ein Verfahren zum Betrieb eines Windparks mit mehreren Windenergieanlagen, wobei das Verfahren beinhaltet, Verfügbarkeitsdaten für jede Windenergieanlage zu erzeugen.

Die europäische Offenlegungsschrift EP 2 206 917 A2 betrifft ein Verfahren und eine Anordnung zum Überwachen einer Windenergieanlage. Dort wird anhand einer festgestellten Abweichung zwischen Zustandsdaten und einem zugehörigen Vergleichswert eine Ausfallwahrscheinlichkeit der Windenergieanlage ermittelt.

Der Erfindung liegt somit die Aufgabe zugrunde, wenigstens eines der oben genannten Problem zu beheben oder zu verringern, insbesondere soll eine Lösung vorgeschlagen werden, die eine genauere Bestimmung der entgangenen Energie, bzw. der produktionsbasierten Verfügbarkeit schafft. Zumindest soll eine alternative Lösung vorgeschlagen werden.

Erfindungsgemäß wird somit ein Verfahren nach Anspruch 1 als auch nach Anspruch 6 vorgeschlagen.

Demnach wird ein Verfahren zum Erstellen einer Datenbank vorgeschlagen. Diese Datenbank umfasst mehrere, insbesondere eine große Anzahl Korrelationsfaktoren, die zur Bestimmung entgangener Energie eingesetzt werden. Die entgangene Energie wird dabei insbesondere so erfasst, wie in Anspruch 6 beansprucht wird. Demnach wird ein Fall betrachtet, in dem eine erste Windenergieanlage stillsteht oder gedrosselt betrieben wird.

Zur Vereinfachung der Erläuterung wird zunächst von einer Windenergieanlage ausgegangen, die stillsteht. In diesem Fall wird die aktuelle Leistung wenigstens einer Referenzwindenergieanlage erfasst, die im ungedrosselten Betrieb arbeitet. Grundsätzlich kann auch von einer gedrosselt betriebenen Referenzwindenergieanlage ausgegangen werden. Zur besseren Erläuterung wird zunächst jedoch von einer ungedrosselten Windenergieanlage ausgegangen. Diese ungedrosselt betriebene Windenergieanlage gibt eine Leistung ab, die gemessen werden kann bzw. dessen Wert in der Steuerung dieser Referenzwindenergieanlage abrufbar enthalten ist. Aus dieser bekannten Leistung wird nun über eine vorab aufgenommene Korrelation, insbesondere über einen vorab ausgenommenen Korrelationsfaktor die zu erwartende Leistung der ersten zurzeit stillstehenden Windenergieanlage berechnet. Wird also beispielsweise die Referenzwindenergieanlage im ungedrosselten Betrieb betrieben und gibt dabei 1 MW Leistung ab und beträgt der Korrelationsfaktor beispielsweise 1,2, so wäre die zu erwartende Leistung der ersten, zurzeit stillstehenden Windenergieanlage auf 1,2 MW zu beziffern. Unter aktuellen Werten, wie bspw. Leistungen oder Umweltbedingungen wie der Windrichtung sind grundsätzlich momentane Werte bzw. Werte momentan vorherrschender Bedingungen zu verstehen.

Dieser Korrelationsfaktor wird für bestimmte Betriebspunkte aufgenommen und insoweit wird nicht nur ein Korrelationsfaktor zwischen dieser einen Referenzwindenergieanlage und der ersten Windenergieanlage zugrunde gelegt, sondern mehrere, insbesondere eine große Anzahl an Korrelationsfaktoren. Grundsätzlich kann eine Korrelation zwischen der Leistung der Referenzwindenergieanlage und der Leistung der ersten Windenergieanlage anders als durch einen Faktor beschrieben werden, wie beispielsweise durch eine Funktion erster oder höherer Ordnung. Die Verwendung von Faktoren stellt jedoch eine verhältnismäßig einfache Lösung dar. Die Genauigkeit der Ermittlung der zu erwartenden Leistung der ersten Windenergieanlage aus der jeweils aktuellen Leistung der Referenzwindenergieanlage ist durch die Bestimmung und Verwendung entsprechend vieler Faktoren möglich, die für entsprechend viele Situationen verwendet und entsprechend vorher aufgenommen werden.

Die Erfindung betrifft somit sowohl das Erfassen der entgangenen Energie als auch die Erfassung der hierfür benötigten Korrelationsfaktoren und damit das Erstellen einer entsprechenden Datenbank.

Vorzugsweise werden diese Korrelationen, die auch als Korrelationsgesetze bezeichnet werden können, insbesondere die Korrelationsfaktoren abhängig von Randbedingungen erfasst und entsprechend abgespeichert. Dabei können Korrelationen zwischen der ersten Windenergieanlage und einer weiteren Referenzwindenergieanlage oder weiteren Referenzwindenergieanlagen aufgenommen werden.

Gemäß einer Ausführungsform werden Absolutwerte der Leistung jeweiliger Betriebspunkte aufgenommen, insbesondere abhängig der Windgeschwindigkeit oder der Windrichtung. Die Aufnahme erfolgt bevorzugt für jede Windenergieanlage, kann aber auch alternativ oder zusätzlich als ein Wert für einen gesamten Windpark aufgenommen werden. Vorzugsweise werden diese Werte zusammen mit Korrelationsfaktoren für jede Windenergieanlage aufgenommen und in einer Datenbank abgelegt. Diese Absolutwerte werden dann verwendet, wenn keine Referenzwindenergieanlage sinnvoll verfügbar ist, insbesondere, wenn alle Windenergieanlagen in einem Windpark gedrosselt betrieben werden oder angehalten werden. Das kann bspw. bei der Reduzierung der Abgabeleistung des gesamten Windparks gemäß einer Vorgabe durch den Netzbetreiber der Fall sein. In einem solchen oder ähnlichen Fall wird für jede Windenergieanlage des Windparks die zu erwartende Leistung, abhängig der Windgeschwindigkeit und der Windrichtung aus der Datenbank ausgelesen. Daraus kann die zu erwartende Energie der betreffenden Windenergieanlage und auch des Windparks insgesamt berechnet werden.

Durch das konkrete Messen und Abspeichern von tatsächlichen Leistungswerten abhängig von Windrichtung und Windgeschwindigkeit wird eine sehr genaue und gut reproduzierbare Grundlage für die Bestimmung der zu erwartenden Leistung geschaffen. Eine Erstellung und Verwendung komplexer Modelle wird vermieden. Für die Bestimmung der zu erwartenden Gesamtleistung eines Windparks werden z.B. die zu erwartenden einzelnen Leistungen der Windenergieanlagen addiert, oder bspw. eine abgespeicherte zu erwartende Gesamtleistung des Windparks aus einer Datenbank ausgelesen. Die Windstärke und Windrichtung wird bspw. an einem zentralen Punkt im Windpark, insbesondere an einem Messmast, erfasst. Ansonsten betreffen alle Aspekte, Erklärungen und Ausführungsformen, die im Zusammenhang mit den Korrelationsfaktoren genannt sind, auch sinngemäß für das Abspeichern und Verwenden absoluter Leistungswerte, soweit anwendbar.

Vorzugsweise werden Korrelationen zwischen allen Windenergieanlagen eines Windparks aufgenommen. Beim Abspeichern wird bei Verwendung mehrerer Referenzwindenergieanlagen zu den jeweiligen Korrelationen die betreffende Referenzwindenergieanlage mit abgespeichert. Mehrere Referenzwindenergieanlagen können beispielsweise verwendet werden, um je nach weiteren Randbedingungen wenigstens eine besonders gut geeignete Referenzwindenergieanlage auszuwählen, und/oder es können mehrere Referenzwindenergieanlagen verwendet werden, um die zu erwartende Leistung redundant zu bestimmen um hierdurch einen Vergleich zur Fehlerminimierung durchzuführen. Es können auch mehrere Referenzwindenergieanlagen verwendet werden, um auch dann eine zu erwartende Leistung der ersten Windenergieanlage bestimmen zu können, wenn aus unvorhergesehenen Gründen eine Referenzwindenergieanlage ausfällt.

Vorzugsweise erfolgt die Auswahl einer Referenzwindenergieanlage abhängig von Randbedingungen wie z.B. der Windrichtung. So kann ggf. abhängig von der Windrichtung eine Referenz-Windenergieanlage mehr oder weniger repräsentativ für das Verhalten der ersten Windenergieanlage, nämlich der zu untersuchenden Windenergieanlage sein. Befindet sich bspw. ein Hindernis zwischen der ersten Windenergieanlage und der gewählten Referenz-Windenergieanlage, kann das zu einer zumindest teilweisen Entkopplung der Verhalten beider Windenergieanlagen führen, wenn der Wind von der Referenz-Windenergieanlage zur ersten Windenergieanlage oder umgekehrt weht. Steht der Wind aber so, dass aus Sicht der Windrichtung beide Windenergieanlagen nebeneinander stehen, ist der Einfluss eines solchen Hindernisses gering.

Eine Referenzwindenergieanlage ist dabei - was für den Fachmann verständlich ist-eine in der Nähe zur ersten Windenergieanlage aufgestellte Referenzwindenergieanlage. Diese Nähe kann dabei einen Abstand von mehreren hundert Metern oder sogar einen oder mehrere Kilometer betragen, solange das Verhalten der Referenzwindenergieanlage noch einen ausreichenden Zusammenhang in ihrem Verhalten zu der ersten Windenergieanlage erwarten lässt. Dies kann von konkreten Umständen wie beispielsweise dem Gelände abhängen. Je gleichmäßiger das Gelände ist und je weniger Hindernisse das Gelände aufweist, um so eher ist zu erwarten, dass auch eine weiter beabstandet aufgestellte Referenzwindenergieanlage noch einen ausreichenden Zusammenhang zu der ersten Windenergieanlage begründet.

Vorzugsweise bilden die aktuelle Leistung der Referenzwindenergieanlage, die aktuelle Windrichtung und/oder die aktuelle Windgeschwindigkeit jeweils eine Randbedingung, in dessen Abhängigkeit die Korrelation aufgenommen und abgespeichert wird. Nachfolgend wird das Verfahren im Zusammenhang mit Korrelationsfaktoren erläutert. Die Erläuterungen sind grundsätzlich auch auf andere Korrelationen übertragbar. Vorzugsweise bildet die aktuelle Windrichtung und die aktuelle Windgeschwindigkeit jeweils eine Randbedingung. Demnach wird ein Korrelationsfaktor zwischen der ersten Windenergieanlage und der betreffenden Referenzwindenergieanlage sowohl abhängig von der Windrichtung als auch abhängig von der Windgeschwindigkeit aufgenommen. So kann beispielsweise ein Korrelationsfaktor von 1,2 bei einer Windgeschwindigkeit von 7 m/s und einer Windrichtung aus Norden herrschen, wohingegen bei derselben Windgeschwindigkeit aber einer Windrichtung aus Süden beispielsweise ein Korrelationsfaktor von 1,4 erfasst wird. Liegt die Windgeschwindigkeit - um ein weiteres Beispiel zu nennen - bei derselben Windrichtung bei nur 6 m/s könnte der Korrelationsfaktor beispielsweise 1 betragen. All diese Werte werden aufgenommen und in einer Datenbank abgelegt. In dem Beispiel mit der Windrichtung und der Windgeschwindigkeit jeweils als eine Randbedingung ergebe sich ein zweidimensionales Datenbankfeld für jede Referenzwindenergieanlage. Werden diese Werte für mehrere Referenzwindenergieanlagen aufgenommen, ergibt sich - bildlich gesprochen - ein dreidimensionales Datenfeld mit der Identifizierung der Referenzwindenergieanlage als weitere veränderliche Größe. Die Art des Abspeicherns bzw. der Aufbau der Datenbank kann auch so ausgebildet sein, dass für alle Windenergieanlagen eines Windparks Korrelationsfaktoren aufgenommen werden und in einer Matrix abgespeichert werden und für jeden Wert einer Randbedingung eine solcher Matrix aufgenommen wird.

Alternativ oder zusätzlich kann die aktuelle Leistung der Referenzwindenergieanlage als Randbedingung verwendet werden. Diese Leistung könnte beispielsweise anstelle der Windgeschwindigkeit zugrunde gelegt werden. Demnach würde also zunächst als Randbedingung die vorherrschende Windrichtung, z.B. Wind aus Norden, und die vorherrschende Leistung, z.B. 1 MW, bestimmt werden. Dann wird der Zusammenhang zwischen der Leistung der ersten Windenergieanlage und der Referenzwindenergieanlage bestimmt und für diese Randbedingungen, nämlich Wind aus Norden und erzeugte Leistung von 1 MW in der Datenbank für diese erste Referenzwindenergieanlage abgelegt. Wird nun die erste Windenergieanlage beispielsweise für eine Wartung angehalten, so kann dessen zu erwartende Leistung bestimmt werden. Hierzu wird der Korrelationsfaktor für die Randbedingungen, also beispielsweise der Korrelationsfaktor für Wind aus Norden bei einer Windgeschwindigkeit von 7 m/s aus der Datenbank ausgelesen, oder alternativ wird, wenn die Datenbank bzw. der Datenbanksatz entsprechend angelegt ist, der Korrelationsfaktor für die Randbedingung von Wind aus Norden und 1 MW erzeugter Leistung aus der Datenbank ausgelesen. Dieser Korrelationsfaktor wird dann in beiden geschilderten Fällen mit der erzeugten Leistung der Referenzwindenergieanlage multipliziert, um die zu erwartende Leistung der ersten Windenergieanlage zu bestimmen.

Bei der zweiten geschilderten Alternative hat die momentane erzeugte Leistung der Referenzwindenergieanlage somit eine Doppelfunktion. Zunächst wird sie verwendet, um den zugeordneten Korrelationsfaktor aus der Datenbank auszulesen, und danach wird sie verwendet, um mit dem ausgelesenen Korrelationsfaktor die zu erwartende Leistung der ersten Windenergieanlage zu berechnen.

Vorzugsweise werden die aktuelle Leistung der Referenzwindenergieanlage, jedenfalls soweit sie als Randbedingung verwendet wird, die aktuelle Windrichtung und/oder die aktuelle Windgeschwindigkeit in diskrete Bereiche eingeteilt werden. Hierdurch kann die Größe der Datenbank begrenzt werden. Wird beispielsweise die Leistung der Referenzwindenergieanlage in 1%-Schritte bezogen auf ihre Nennleistung unterteilt, ergebe sich für eine Windenergieanlage mit einer Nennleistung von 2 MW also eine Einteilung in 20 KW-Bereiche bzw. -Schritte. Dies betrifft aber nur die Leistung, soweit sie als Randbedingung verwendet wird, also soweit sie verwendet wird, um den Korrelationsfaktor in der Datenbank abzulegen bzw. aus der Datenbank auszulesen. Für die konkrete Berechnung der zu erwartenden Leistung der ersten Windenergieanlage wird aber der Korrelationsfaktor mit der tatsächlichen, nicht in diskrete Bereiche eingeteilten Leistung, multipliziert. Natürlich könnte auch eine Multiplikation mit der in diskrete Bereiche eingeteilten Leistung vorgenommen werden, insbesondere dann, wenn die diskreten Bereiche in der Größenordnung der Genauigkeit der Leistungsmessung liegen.

Die Windgeschwindigkeit kann beispielsweise in 0,1 m/s-Schritte bzw. -Bereich eingeteilt werden, und die Windrichtung kann beispielsweise in 30°-Sektoren eingeteilt werden.

Wird beispielsweise für eine Referenzwindenergieanlage mit einer Anlaufwindgeschwindigkeit bzw. einer sogenannten "cut-in-"Windgeschwindigkeit von 5 m/s und einer Nennwindgeschwindigkeit von 25 m/s eine Diskretisierung der Windgeschwindigkeiten in 30°-Sektoren und eine Diskretisierung der Windgeschwindigkeit in 0,1 m/s-Schritte vorgenommen, so ergibt sich ein Datenfeld von 360 Grad/ 30 Grad = 12 Windgeschwindigkeitssektoren mal (20 m/s)/(0,1 m/s)= 200 Windgeschwindigkeitsschritten und damit ein Datenfeld mit 2400 Feldern, also 2400 Korrelationsfaktoren für diese beispielhafte Referenzwindenergieanlage.

Vorzugsweise werden die Korrelationsfaktoren im regulären Betrieb aufgenommen und abgespeichert, um die Datenbank dadurch sukzessive mit den Korrelationsfaktoren zu füllen. Optional und/oder bedarfsabhängig können Korrelationsfaktoren, die noch nicht durch Messungen bestimmt werden konnten, aus bereits vorhandenen Korrelationsfaktoren berechnet, insbesondere interpoliert oder extrapoliert. Auch bei Verwendung eines anderen Korrelationsgesetzes als eines Korrelationsfaktors, bspw. einer Korrelationsfunktion 1. Ordnung kann eine Interpolation oder Extrapolation erfolgen, z.B. durch Interpolation bzw. Extrapolation von Koeffizienten einer solchen Korrelationsfunktion. Es wird somit vorgeschlagen, dass die erste Windenergieanlage und die wenigstens eine Referenzwindenergieanlage ungeachtet eines Bedarfs der Bestimmung vom Korrelationsfaktoren betrieben wird. Hierbei stellen sich zwangsläufig - sofern die Anlagen überhaupt betrieben werden - ein bestimmter Betriebspunkt und somit entsprechende Randbedingungen ein, wie Windrichtung und Windgeschwindigkeit. Hierfür wird ein Korrelationsfaktor aufgenommen und unter Berücksichtigung der vorherrschenden Randbedingungen in der Datenbank abgespeichert. Vorzugsweise erfolgt das für alle Windenergieanlagen des Windparks untereinander. Ändert sich der Betriebspunkt und damit die Randbedingung, wird erneut ein Korrelationsfaktor berechnet und unter den neuen Randbedingungen und damit in einer anderen Adresse der Datenbank abgespeichert.

Hierdurch umfasst die Datenbank nur die Korrelationsfaktoren für die Randbedingungen, unter denen die Windenergieanlage bereits betrieben wurde. Wird nun die erste Windenergieanlage abgeschaltet und stellt sich ein Betriebspunkt für die Referenzwindenergieanlage ein, für den bisher kein Korrelationsfaktor aufgenommen wurde, kann dieser aus benachbarten, bereits abgespeicherten Korrelationsfaktoren berechnet werden, also aus Korrelationsfaktoren, die zu ähnlichen Randbedingungen bereits aufgenommen wurden. Beispielsweise kann der Korrelationsfaktor für eine Windrichtung des Sektors 0 bis 30° und der Windgeschwindigkeit von 10 m/s aus zwei Korrelationsfaktoren interpoliert werden, von denen der eine für den Windrichtungssektor von 330 bis 360 Grad bei einer Windgeschwindigkeit von 9,9 m/s aufgenommen wurde und der andere in einem Windrichtungssektor von 30 bis 60° bei einer Windgeschwindigkeit von 10,1 m/s aufgenommen wurde. Dies sei nur ein einfaches Beispiel für eine Berechnung durch Interpolation. Ebenso können mehrere Korrelationsfaktoren zur Berechnung oder Schätzung eines fehlenden Korrelationsfaktors herangezogen werden.

Sind noch nicht viele Korrelationsfaktoren aufgenommen, weil z.B. die betreffenden Windenergieanlagen noch nicht lange in Betrieb sind, insbesondere im ersten Jahr des Betriebs eines Windparks, kann die Berechnung der entgangenen Energie rückwirkend für den vergangenen Zeitraum, wie z.B. das vergangene Jahr erfolgen. Hierfür werden die Daten der erzeugten Leistung der Referenzanlagen gespeichert. Am Ende des maßgeblichen Zeitraumes kann dann aus den gespeicherten Leistungsdaten und den bis dann zwischenzeitlich erfassten Korrelationsfaktoren die entgangene Energie berechnet werden. Das hat den Vorteil, dass bis dahin mehr Korrelationsfaktoren aufgenommen werden konnten und somit weniger Interpolationen oder Extrapolationen benötigt werden bzw. ganz unterbleiben können.

Als weitere Randbedingungen können beispielsweise Umgebungsbedingungen wie Temperatur, Luftdruck, Luftfeuchtigkeit und Dichte der Luft aufgenommen werden. Diese beispielhaft genannten Randbedingungen, die teilweise physikalisch zusammenhängen, können den Betrieb der Windenergieanlage beeinflussen und sich entsprechend in dem betreffenden Korrelationsfaktor niederschlagen. Die Berücksichtigung mehrerer Randbedingungen kann zu einer mehrdimensionalen Datenbank für die Korrelationsfaktoren führen.

Allerdings ist das erfindungsgemäße Verfahren zum Erfassen der entgangenen Energie hinsichtlich Variationen von Randbedingungen und insbesondere auch hinsichtlich Ungenauigkeiten von Messungen wie der Windgeschwindigkeit tolerant. Das vorgeschlagene Verfahren weist nämlich zumindest ein zweistufiges Konzept auf.

In der ersten Stufe wird ein Korrelationsfaktor abhängig von Randbedingungen gewählt. Durch die Berücksichtigung der Randbedingungen gibt dieser Korrelationsfaktor eine recht genaue und insbesondere verlässliche Korrelation wieder.

In der zweiten Stufe wird der entsprechende Korrelationsfaktor mit der Leistung der Referenzwindenergieanlage multipliziert. Hierdurch können Einflussfaktoren wie die Luftdichte berücksichtigt werden, ohne dass diese aufgenommen werden müssen. Wird beispielsweise die Luftdichte bei der Auswahl des Korrelationsfaktors nicht als Randbedingung berücksichtig, fließt diese aber indirekt, ohne ausdrückliche Messung, in die Leistung der Referenzwindenergieanlage ein. Bei einer Luftdichte ergibt sich also eine entsprechend hohe Leistung der Windenergieanlage, weil die Luft mit hoher Dichte mehr kinetische Energie beinhaltet. Durch Multiplikation mit dem - luftdichteunabhängigen - Korrelationsfaktor ergibt sich somit bei höherer Leistung der Referenzwindenergieanlage auch eine höhere berechnete zu erwartende Leistung der ersten Windenergieanlage. Bei einer Bestimmung der zu erwartenden Leistung der ersten Windenergieanlage über eine Windgeschwindigkeitsmessung und die Leistungskennlinie der ersten Windenergieanlage würde die Luftdichte - um bei diesem Beispiel zu bleiben - unberücksichtigt bleiben. Es ergebe sich eine entsprechend fehlerhaft berechnete zu erwartende Leistung der ersten Windenergieanlage.

Auch ist das Verfahren beispielsweise tolerant gegenüber einer ungenauen Messung der Windgeschwindigkeit. Dies ist schon deswegen von Bedeutung, weil gerade die Windgeschwindigkeit schwierig zu messen ist und großen Fehlern unterliegt. Bei den vorgeschlagenen Verfahren geht die Windgeschwindigkeit aber nur in die Bestimmung des Korrelationsfaktors ein, falls sie überhaupt eingeht. Liegt die gemessene Windgeschwindigkeit beispielsweise um etwa 10% über der tatsächlichen Windgeschwindigkeit, so geht dies einerseits bei der Bestimmung und entsprechenden Abspeicherung des betreffenden Korrelationsfaktors ein, schlägt sich andererseits aber auch beim Wiederauslesen des Korrelationsfaktors nieder, wenn dies windgeschwindigkeitsabhängig erfolgt. Dieser beispielhaft genannte systematischer Fehler hebt sich dadurch aber wieder heraus. Mit anderen Worten dient hierbei die Windgeschwindigkeit nur zur ungefähren Wiedererkennung des zugrunde liegenden Betriebspunktes. Inwieweit der absolute Wert der Windgeschwindigkeit fehlerhaft ist, schlägt sich nicht nieder, solange derselbe wieder reproduziert wurde.

Stellt sich bei der Messung der Windgeschwindigkeit ein zufälliger Fehler ein, was üblicherweise allerdings nicht im großen Umfang zu erwarten ist, kann dies allenfalls zu dem Auslesen eines falschen Korrelationsfaktors führen. Allerdings dürfte hierbei zumindest ein Korrelationsfaktor einer ähnlichen Windgeschwindigkeit ausgelesen werden, der in geringerem Maße variieren dürfte, als die Windgeschwindigkeit selbst. Auch in diesem Fall erweist sich das Verfahren somit fehlertolerant.

Das bisher für den Fall eines Stillstands der ersten Windenergieanlage beschriebene Verfahren ist grundsätzlich auch auf den Fall einer Drosselung der ersten Windenergieanlage zu übertragen. Wird beispielsweise zur Schallreduzierung die erste Windenergieanlage gedrosselt, wohingegen eine Referenzwindenergieanlage nicht gedrosselt wird, weil sie beispielsweise kleiner ist, grundsätzlich geräuschärmer gebaut ist, oder in einer größeren Entfernung von einer Siedlung aufgestellt ist, als die erste Windenergieanlage, kann in der oben beschriebenen Art und Weise die zu erwartende Leistung der ersten Windenergieanlage im ungedrosselten Betrieb bestimmt werden. Die entgangene Energie ergibt sich aus der Differenz der Leistung im gedrosselten Betrieb und der berechneten zu erwartenden Leistung im ungedrosselten Betrieb. Der Vollständigkeit halber wird noch darauf hingewiesen, dass es für den Fachmann klar ist, dass sich die entgangene Energie aus der entgangenen Leistung, integriert über den relevanten Zeitabschnitt ergibt.

Im einfachsten oder vereinfachten Fall bedeutet dies eine Multiplikation der entgangenen Leistung mit einem entsprechenden Zeitabschnitt.

Vorzugsweise wird vorgeschlagen, dass zum Bestimmen der zu erwartenden Leistung der ersten Windenergieanlage mehrere Referenzwindenergieanlagen verwendet werden. Bei der Erfassung der Korrelationsfaktoren oder anderen Korrelationen kann wie beschrieben für jede Referenzwindenergieanlage einzeln vorgegangen werden, so dass sich ein Datensatz für jede Referenzwindenergieanlage ergibt. Es können auch die Korrelationen zwischen allen betrachteten Windenergieanlagen zugleich aufgenommen und jeweils in ein Matrix geschrieben werden. Wird dann bei Stillstand der ersten Windenergieanlage ihre zu erwartende Leistung berechnet, so kann dies jeweils mit Hilfe jeder der Referenzwindenergieanlagen erfolgen, indem jeweils ein Korrelationsfaktor zu dieser Referenzwindenergieanlage ausgelesen und mit ihrer momentanen Leistung multipliziert wird, um die zu erwartende Leistung der ersten Windenergieanlage zu berechnen. Im Idealfall ergibt sich hierbei aus jeder Referenzwindenergieanlage die gleiche zu erwartende Leistung der ersten Windenergieanlage. Wird dieses Idealergebnis erreicht, so bestätigt dies die Qualität der Berechnung der zu erwartenden Leistung. Ergeben sich aber Abweichungen, so können die mehrfach und somit redundant bestimmten zu erwartenden Leistungen verwendet werden, um dadurch eine einzige zu erwartende Leistung zu berechnen. Hierzu kann beispielsweise ein einfacher Mittelwert gebildet werden, indem also alle bestimmten Leistungen aufaddiert und durch die Anzahl geteilt werden. Gegebenenfalls kann aber eine Referenzwindenergieanlage als relevanter eingestuft werden, und der durch sie ermittelte Wert kann über eine Gewichtung stärker berücksichtigt werden. Eine andere Möglichkeit besteht in der Verwendung der Methode der kleinsten Fehlerquadrate. Es wird also ein gemeinsamer zu erwartenden Leistungswert bestimmt, bei dem die Quadrate jeder Abweichung zu den einzeln bestimmten zu erwartenden Leistungen in Summe den kleinsten Wert ergeben.

Vorzugsweise wird die aktuelle Windrichtung und/oder die aktuelle Windgeschwindigkeit an der Referenzwindenergieanlage, in der ersten Windenergieanlage und/oder an einem anderen Messpunkt, insbesondere einem Messmast erfasst. Wenn die erste Windenergieanlage im Stillstand ist, kann gleichwohl noch ein Teil der Messtechnik wie beispielsweise die Auswertung des Gondelaneometer in Betrieb sein und somit jedenfalls die ungefähre Windgeschwindigkeit der ersten Windenergieanlage bestimmen und für das weitere Verfahren zugrunde legen. Es kann aber vorteilhaft sein, die Windgeschwindigkeit einer Referenzwindenergieanlage zu verwenden, weil hierdurch eine hohe Korrelation zu der Leistung dieser Referenzwindenergieanlage zu erwarten ist. Dabei sollte möglichst bei der Erfassung der Korrelationsfaktoren und dem Auslesen derselben an jeweils der gleichen Stelle gemessen werden. Die Verwendung eines Messmastes kann günstig sein, weil hier oftmals eine bessere Windgeschwindigkeitsmessung möglich ist. Insbesondere wird eine Windgeschwindigkeitsmessung an einem Windmast nicht durch kurzzeitige Abschattungen durch Rotorblätter gestört, wie dies regelmäßig bei Gondelaneometern einer laufenden Windenergieanlage der Fall ist. Zudem kann der Messmast einen neutralen Punkt zum Messen darstellen, wenn mehrere Windenergieanlagen als Referenzwindenergieanlagen verwendet werden. Vorteilhaft kann es sein, einen Messmast zu verwenden, der in und für einen Windpark aufgestellt ist und eine repräsentative Messgröße für den Windpark insgesamt liefert. Die Verwendung von Werten einer nahegelegenen Wetterstation, sei es als unmittelbare Werte oder zum Abgleich der mit einem Messmast oder einer Windenergieanlage gemessenen Windgeschwindigkeit, kann vorteilhaft sein und die Qualität der Messergebnisse verbessern.

Erfindungsgemäß ist eine Windenergieanlage mit einem beschriebenen Verfahren zum Erfassen der Korrelationsgesetze insbesondere der Korrelationsfaktoren und/oder mit einem Verfahren zum Bestimmen einer entgangenen Energie ausgestattet.

Erfindungsgemäß wird zudem ein Windpark vorgeschlagen, der mit wenigstens einem der oben beschrieben Verfahren ausgestattet ist. In einem solchen Windpark - aber nicht nur in einem solchen - kann ein Datenaustausch zwischen Windenergieanlagen beispielsweise über ein SCADA vorbereitet sein. Ein solches Datenaustauschsystem kann auch verwendet werden, um die zu den beschriebenen Verfahren notwendigen Daten auszutauschen.

Somit wird eine Lösung, nämlich entsprechende Verfahren als auch eine Windenergieanlage bzw. eine Windpark vorgeschlagen, mit der entgangene Energie berechnet werden kann. Hierzu wird Leistung einer stillstehenden oder gedrosselt betriebenen Windenergieanlage berechnet und über die zugrunde liegende Zeit kann dann die entgangenen Energie, also die Energie die nach Berechnung hätte erzeugt, geliefert und entsprechend vergütet werden können, bestimmt. Es handelt sich hierbei im Grunde um eine fiktive Leistung bzw. fiktive Energie, die entsprechend genau bestimmt werden soll, sowohl im Interesse dessen, der eine Vergütung erwartet als auch dessen der eine solche Vergütung leisten muss, möglichst gerecht zu berücksichtigen.

Es kann somit eine produktionsbasierte Verfügbarkeit der Windenergieanlage berechnet werden. Eine solche produktionsbasierte Verfügbarkeit, die basierend auf dem englischen Begriff "production based availability" auch als PBA abgekürzt wird, wird häufig als Quotient der gemessenen erzeugten Energie ("measured energy production" MEP) geteilt durch die erwartete erzeugte Energie (expected energy production", EEP) angegeben, wobei ein Jahreszeitraum oder ein Monatszeitraum zugrunde gelegt wird. Für die produktionsbasierte Verfügbarkeit PBA kommt z.B. eine Berechnung nach der folgenden Formel in Betracht:

PBA=MEP/EEP

Die PBA kann unterschiedlich definiert werden und entsprechend können andere Formeln verwendet werden. Auch können die Parameter obiger Formel unterschiedlich definiert werden. Nachfolgend wird eine Möglichkeit für die Parameter obiger Formel erläutert.

Die tatsächlich produzierte Energie des Jahres (MEP) kann durch eine entsprechende Messeinheit über das Jahr aufgenommen werden, wie beispielsweise durch einen Stromzähler bzw. Energiezähler. Eine solche Messung der produzierten Energie ist üblicherweise in einer Windenergieanlage vorbereitet, und auf die Daten kann zugegriffen werden.

Die erwartete Energieproduktion, also die erwartete Umsetzung von Windenergie in elektrische Energie (EEP) ist somit die Summe der tatsächlich erzeugten Energie (MEP) und der entgangenen Energie, deren Berechnung bzw. Bestimmung erfindungsgemäß vorgenommen, insbesondere verbessert wird. Erfindungsgemäß wird nämlich ein Verfahren vorgeschlagen, bei dem Leistungsausgänge zwischen Windenergieanlagen insbesondere eines Windparks korreliert werden. Eine bevorzugte Variante besteht darin, eine Matrix zu erzeugen, die jeweils einen Korrelationsfaktor zwischen jeder hierzu betrachteten Windenergieanlage also insbesondere zwischen jeder Windenergieanlage eines Parks beinhaltet. Eine solche Matrix ist nachfolgend beispielhaft für eine Windenergieanlage veranschaulicht, die als WEC1, WEC2, WEC3, WEC4 bis WECn in dieser Matrix bezeichnet werden. Die eingetragenen Werte sind nur beispielhafte Werte.

Tabelle 1

| Produktionskorrelation | WEC1 | WEC2 | WEC3 | WEC4 | ... | WECn |
|---|---|---|---|---|---|---|
| absolut | 1,2MW | 1,3MW | 1,4MW | 1MW | ... | 0,9MW |
| WEC1 | 1 | - | - | - | | - |
| WEC2 | 1,15 | 1 | - | - | | - |
| WEC3 | 0,84 | 1,24 | 1 | - | | - |
| WEC4 | 0,98 | 0,78 | 1,01 | 1 | | - |
| ... | ... | ... | ... | | 1 | - |
| WECn | 1,02 | 1,06 | 1,08 | 0,98 | ... | 1 |

Diese Matrix kann als Referenzproduktionskorrelation des Windparks angesehen werden. Diese Matrix enthält bspw. die Faktoren für eine Windgeschwindigkeit von 8m/s und eine Windrichtung von 30°, was z.B. einen Bereich von 0-30° bezeichnen kann. Außerdem sind absolute Werte enthalten, die ggf. verwendet werden können, wenn auch die anderen Referenzanlagen still stehen oder gedrosselt sind.

Sofern nun eine Windenergieanlage stillsteht oder gedrosselt betrieben wird, kann ihre erwartete Leistung und damit die erwartete erzeugte Energie aus wenigstens einer tatsächlichen Leistung bzw. tatsächlichen Energie einer der anderen Windenergieanlage über den Korrelationsfaktor berechnet werden.

Am Ende einer vereinbarten Periode, wie beispielsweise jährlich oder monatlich, kann die produktionsbasierte Verfügbarkeit (PBA) somit berechnet werden. Vorzugsweise werden als Referenzdaten nur solche Daten zugrunde gelegt, die im ungedrosselten Betrieb aufgenommen wurden. Je länger der Windpark bereits im ungedrosselten Betrieb betrieben wurde - hier können Perioden dazwischen liegen, in denen das nicht der Fall war - umso vollständiger und gegebenenfalls besser kann die Datenbasis sein.

Die oben gezeigte Tabelle kann zudem für unterschiedliche Windrichtungen und unterschiedliche Windgeschwindigkeiten oder auch andere Randbedingungen aufgenommen werden, so dass für einen Windpark oder andere Windenergieanlagenansammlung viele solcher Tabellen vorliegen bzw. zusammen eine Datenbank bilden.

Nachfolgend wird die Erfindung anhand von Ausführungsformen unter Bezugnahme auf die begleitenden Zeichnungen beispielhaft erläutert.

Figur 1    zeigt eine bekannte Windenergieanlage.

Figur 2    zeigt ein Ablaufdiagramm zu Erfassen von Korrelationskoeffizienten.

Figur 3    zeigt einen Ablaufplan zum Erfassen entgangener Energie.

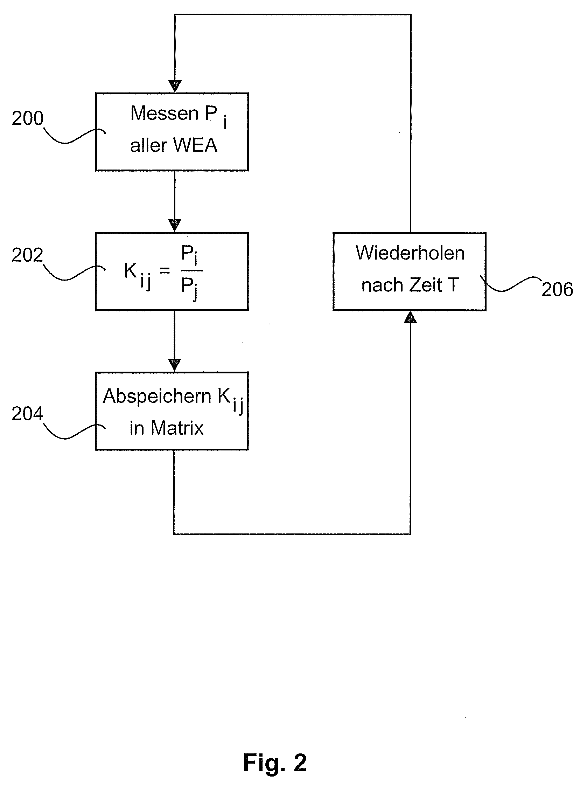

Gemäß der Figur 2 werden Korrelationsparameter für die Beziehung mehrerer Windenergieanlagen untereinander aufgenommen. Insbesondere richtet sich dies an die Korrelation einiger oder aller Windenergieanlagen eines Windparks. Im Messblock 200 wird die Leistung jeder der Windenergieanlagen gemessen. Dies bedeutet üblicherweise, dass die ohnehin in jeder Windenergieanlage verfügbare Leistung für die nachfolgenden Schritte verwendet wird bzw. bereitgestellt wird. Diese Bereitstellung der Leistung als auch der weiteren notwendigen auszutauschenden Daten kann beispielsweise über ein sogenanntes SCADA-System erfolgen.

Im Berechnungsblock 202 werden die Korrelationsfaktoren zwischen den jeweils im Messblock 200 aufgenommenen Leistungen berechnet. Die Formel hierfür lautet:

$$Kij = \frac{Pi}{Pj}$$

Der Faktor Kij stellt somit die Korrelation zwischen der Leistung Pi der Windenergieanlage i und der Leistung Pj der Windenergieanlage j dar. Die Indizes i und j sind somit ganzzahlige Laufvariablen.

Die so berechneten Korrelationsfaktoren Kij werden dann im nächsten Schritt im Speicherblock 204 in einer Matrix abgespeichert. Die Matrix entspricht z.B. der Tabelle 1.

Bei diesem Vereinfachten Ablauf gemäß der Blöcke 200, 202 und 204 werden sämtliche Korrelationsfaktoren zwischen allen Windenergieanlagen des Parks bei jeweils gleichen Randbedingungen aufgenommen und abgespeichert. Je nach Bedingungen wird die entsprechende Matrix ausgewählt, die somit mit den jeweiligen Randbedingungen wie Windrichtung und Windgeschwindigkeit verknüpft ist. Der skizzierte Ablauf setzt zunächst voraus, dass sämtliche Windenergieanlagen im Normalbetrieb laufen, also ungedrosselt laufen. Gegebenenfalls können auch gedrosselte Windenergieanlage berücksichtigt werden, oder die Leistung von den gedrosselten Windenergieanlagen wird nicht berücksichtigt und entsprechend auch die betroffenen Korrelationsfaktoren nicht berechnet. Die entsprechenden Einträge in der Matrix bleiben dann frei.

Über den Wiederholungsblock 206 wird das dargestellte Verfahren sukzessive wiederholt. Hierzu kann beispielsweise eine Wiederholzeit T festgelegt werden, die beispielsweise 10 min betragen kann. Der dargestellte Prozess der Figur 2 würde dann alle 10 min durchgeführt werden.

Wird bei der Wiederholung ein Korrelationsfaktor oder mehrere Korrelationsfaktoren bestimmt, zu denen bereits Werte abgespeichert sind, so kann entweder der jeweils neu bestimmte Korrelationsfaktor verworfen werden, er kann den an seiner Stelle bereits vorhandenen Korrelationsfaktor ersetzen oder es kann der abgespeicherte Korrelationsfaktor verbessert werden, indem beispielsweise eine Mittelwertbildung aller bisher aufgenommenen Werte dieses Korrelationsfaktors also dieses Eintrags gebildet wird. Es kann auch vorgesehen sein, nur einige wie beispielsweise die letzten 10 Werte hierbei zu berücksichtigen und entsprechend einen Mittelwert zu bilden.

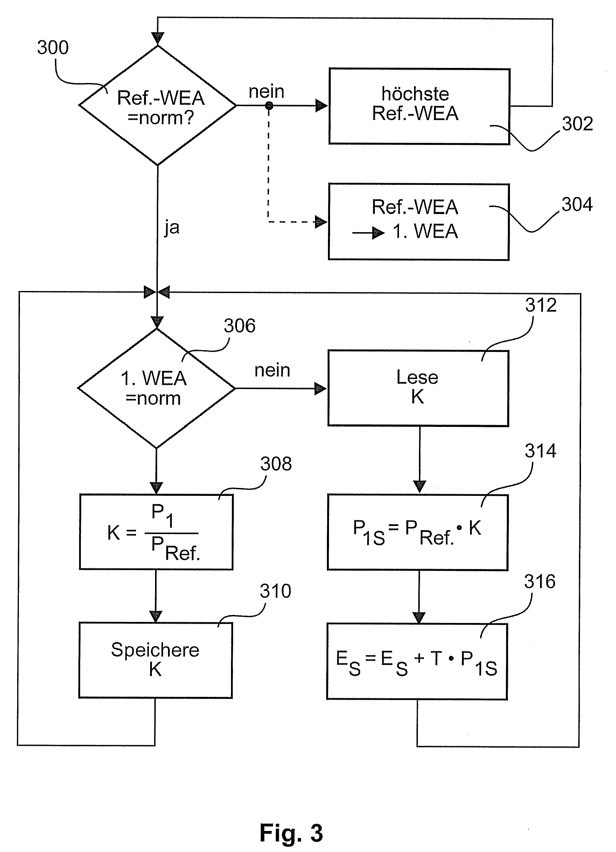

Figur 3 zeigt ein Verfahren, das zunächst nur zwei Windenergieanlagen betrachtet, nämlich eine Referenzwindenergieanlage und eine erste Windenergieanlage. Das Verfahren der Figur 3 kann auf diversen Windenergieanlagen bzw. Windenergieanlagenpaare ausgedehnt werden, bis sämtliche Windenergieanlagen des Windparks berücksichtig wurden. Dabei kann das gezeigte Verfahren auch mehrfach parallel zu unterschiedlichen Windenergieanlagen ausgeführt werden. Auch hier kann die Berechnung und/oder notwendige Datenübertragung mit Hilfe eines SCADA erfolgen.

Figur 3 zeigt zunächst einen ersten Abfrageblock 300, in dem überprüft wird, ob die ausgewählte Referenzwindenergieanlage im Normalbetrieb, also ungedrosselt arbeitet. Ist dies nicht der Fall, so kann eine andere Windenergieanlage als Referenzwindenergieanlage gemäß dem Wechselblock 302 ausgewählt werden. Mit dieser nächsten Windenergieanlage wird zunächst wieder in dem ersten Abfrageblock 300 gestartet werden.

Außerdem kann die gerade untersuchte Referenzwindenergieanlage, die nicht im Normalbetrieb läuft, insbesondere sich im Stillstand befindet, als erste Windenergieanlage ausgewählt werden. Dies ist durch den Auswahlblock 304 gezeigt. Die erste Windenergieanlage ist hierbei diejenige, für die die entgangene Leistung bzw. entgangene Energie zu bestimmen ist, für die also die zu erwartende Leistung bzw. Energie berechnet werden soll.

Sobald eine ausgewählte Referenzwindenergieanlage ungedrosselt arbeitet, verzweigt sich der erste Abfrageblock 300 zu dem zweiten Abfrageblock 306. Der zweite Abfrageblock 306 überprüft im Grunde dasselbe, was auch der erste Abfrageblock 300 überprüft hat, jedoch für die erste Windenergieanlage. Arbeitet die erste Windenergieanlage ungedrosselt, also im Normalbetrieb, so verzweigt der zweite Abfrageblock 306 weiter zu dem Berechnungsblock 308. In dem Berechnungsblock 308 wird der Korrelationsfaktor K aus dem Koeffizienten der Leistung der ersten Windenergieanlage und der Leistung der Referenzwindenergieanlage berechnet. In dem sich anschließenden Speicherblock 310 wird dieser Korrelationsfaktor K in einer Datenbank abgespeichert. Dabei werden vorzugsweise Randbedingungen wie vorherrschende Windrichtungen und Windgeschwindigkeit mit aufgenommen. Schließlich kehrt das Verfahren nach dem Speicherblock 310 wieder zurück zum zweiten Abfrageblock 306, und die Blöcke 306, 308 und 310 werden erneut, möglicherweise nach einem Zeitverzug von beispielsweise 10 min durchlaufen. Arbeitet das Verfahren in dieser Schleife dieser drei Blöcke 306, 308 und 310, so findet im Grunde eine Akquirierung der Korrelationsfaktoren K speziell für diese beiden Windenergieanlagen, nämlich eine Referenzwindenergieanlage und die erste Windenergieanlage statt. Die Windenergieanlagen befinden sich also im Normalbetrieb und erstellen dabei nach und nach die Datenbank, die für einen Nichtnormalbetrieb benötigt wird.

Wird in dem zweiten Abfrageblock 306 festgestellt, dass sich die erste Windenergieanlage nicht im Normalbetrieb befindet, also gedrosselt arbeitet oder im Stillstand ist, so wird zum Leseblock 312 verzweigt. In diesem Block wird nun der Korrelationsfaktor K entsprechend der zuvor erstellten Datenbank ausgelesen, insbesondere unter Berücksichtigung von Randbedingungen wie der vorherrschenden Windgeschwindigkeit und Windrichtung. Ist der betreffende Korrelationsfaktor nicht in der Datenbank abgespeichert, so kann er gegebenenfalls aus anderen bereits vorhandenen Korrelationsfaktoren interpoliert werden.

Mit dem ausgelesen Korrelationsfaktor K kann dann im Bestimmungsblock 314 aus der Referenzleistung $P_{Ref}$ der Referenzwindenergieanlage die erwartete Leistung der ersten Windenergieanlage bestimmt werden. Diese Leistung wird hier als $P_{1S}$ bezeichnet.

Im Energiebestimmungsblock 316 erfolgt dann die Bestimmung der zugeordneten Energie über Integration der geschätzten bzw. erwarteten Leistung $P_{1S}$ über die entsprechende Zeit. Da hier vereinfachend von einer konstanten Leistung $P_{1S}$ für den betreffenden Zeitabschnitt ausgegangen wird, wird die Energie durch die Multiplikation von $P_{1S}$ mit dem zugehörigen Zeitwert T berechnet. Diese Energie kann zu der bereits zuvor berechneten Energie $E_S$ dazu addiert werden, um so die betreffende, zu erwartende Energie über eine Beobachtungsperiode wie beispielsweise einen Monat oder ein Jahr aufzusummieren.

Der Zeitfaktor T des Energiebestimmungsblocks 316 kann dem Zeitfaktor T des Wiederholungsblocks 206 der Figur 2 entsprechen. Dies ist aber keine zwingende Voraussetzung. Insbesondere kann es sein, dass alle 10 min die beschriebenen Schritte wiederholt werden und eine Schätzleistung im Bestimmungsblock 314 bestimmt wird. Dabei kann aber die erste Windenergieanlage möglicherweise erst beispielsweise 5 min nicht mehr im Normalbetrieb sein. Diese Information steht dem gezeigten Verfahren zur Verfügung und trotz einer Wiederholperiode von 10 min würde in diesem Beispiel die Energieberechnung aber nur den Zeitraum von 5 min zugrunde legen.

Nachdem die Energie im Energiebestimmungsblock 316 bestimmt bzw. ergänzt wurde, startet das Verfahren wieder an dem zweiten Abfrageblock 306 wie beschrieben.

### Patentansprüche

1. Verfahren zum Erstellen einer Datenbank, die, mehrere Korrelationsgesetze, insbesondere Korrelationsfaktoren umfasst, zum Bestimmen entgangener Energie, die während eines Stillstands oder einer Drosselung einer ersten Windenergieanlage von dieser nicht in elektrische Energie gewandelt werden kann, aus der aufgenommenen Leistung wenigstens einer gedrosselt oder ungedrosselt betriebenen Referenz-Windenergieanlage, umfassend die Schritte:

   gleichzeitiges Erfassen momentaner Leistung der ersten Windenergieanlage und wenigstens einer Referenz-Windenergieanlag im gedrosselten oder ungedrosselten Betrieb,
   Bestimmen jeweils eines, einen Zusammenhang zwischen der Leistung der ersten Windenergieanlage und der Leistung der wenigstens einen Referenz-Windenergieanlage beschreibenden Korrelationsgesetzes, insbesondere Korrelationsfaktors und
   Abspeichern des wenigstens einen Korrelationsgesetzes, bzw. Korrelationsfaktors in Abhängigkeit wenigstens einer Randbedingung.

2. Verfahren zum Erstellen einer Datenbank nach Anspruch 1, **dadurch gekennzeichnet, dass** die wenigstens eine Randbedingung ausgewählt ist aus der Liste umfassend

   - die aktuelle Windrichtung,
   - die aktuelle Windgeschwindigkeit,
   - die aktuelle Leistung der Referenz-Windenergieanlage,
   - die aktuelle Außentemperatur und
   - die aktuelle Luftdichte,

   und/oder dass für die erste Windenergieanlage, die Referenzwindenergieanlage und/oder für weitere Windenergieanlagen die momentane Leistung in Abhängigkeit wenigstens einer Randbedingung abgespeichert wird.

3. Verfahren zum Erstellen einer Datenbank nach Anspruch 2, **dadurch gekennzeichnet, dass**

- die aktuelle Windrichtung,
- die aktuelle Windgeschwindigkeit,
- die aktuelle Leistung der Referenz-Windenergieanlage,
- die aktuelle Außentemperatur und/oder
- die aktuelle Luftdichte,

zur Verwendung als Randbedingung in diskrete Bereiche unterteilt wird.

4. Verfahren zum Erstellen einer Datenbank nach einem der vorstehenden Ansprüche, **dadurch gekennzeichnet, dass** die Korrelationsgesetze bzw. Korrelationsfaktoren im regulären Betrieb aufgenommen und abgespeichert werden, um die Datenbank dadurch sukzessive mit den Korrelationsfaktoren zu füllen und dass optional und/oder bedarfsabhängig noch nicht durch Messung bestimmte Korrelationsgesetze bzw. Korrelationsfaktoren berechnet, insbesondere interpoliert oder extrapoliert werden.

5. Verfahren zum Erstellen einer Datenbank nach einem der vorstehenden Ansprüche, **dadurch gekennzeichnet, dass** für unterschiedliche Werte bzw. unterschiedliche Wertekombinationen einer bzw. mehrerer Randbedingungen jeweils ein Satz Korrelationsgesetze bzw. ein Satz Korrelationsfaktoren für drei oder mehr Windenergieanlagen aufgenommen wird, wobei jeweils ein Korrelationsgesetz bzw. Korrelationsfaktor die Korrelation jeweils zweier Windenergieanlagen davon beschreibt.

6. Verfahren zum Erfassen entgangener Energie, die wegen Stillstand oder Drosselung einer ersten Windenergieanlage von dieser ersten Windenergieanlage nicht in elektrische Energie gewandelt werden kann, umfassend die Schritte:

   - Erfassen der aktuellen Leistung wenigstens einer Referenz-Windenergieanlage im gedrosselten oder ungedrosselten Betrieb,
   - Berechnen der zu erwartenden Leistung der ersten Windenergieanlage aus der Leistung der wenigstens einen Referenz-Windenergieanlage und einem vorabaufgenommenen Korrelationsgesetz, insbesondere einem vorab aufgenommenen Korrelationsfaktor, der für diesen Betriebspunkt eine Korrelation zwischen der Leistung der jeweiligen Referenz-Windenergieanlage und einer zu erwartenden Leistung der ersten Windenergieanlage angibt, und
   - Berechnen der entgangenen Energie aus der berechneten, zu erwartenden Leistung und einer zugeordneten Zeitspanne wobei

   das vorabaufgenommene Korrelationsgesetz bzw. der vorab aufgenommene Korrelationsfaktor aus einer vorab erstellten Datenbank verwendet wird und
   die Datenbank durch ein Verfahren erstellt wurde, das die Schritte umfasst gleichzeitiges Erfassen momentaner Leistung der ersten Windenergieanlage und wenigstens einer Referenz-Windenergieanlag im gedrosselten oder ungedrosselten Betrieb,
   Bestimmen jeweils eines, einen Zusammenhang zwischen der Leistung der ersten Windenergieanlage und der Leistung der wenigstens einen Referenz-Windenergieanlage beschreibenden Korrelationsgesetzes, insbesondere Korrelationsfaktors und
   Abspeichern des wenigstens einen Korrelationsgesetzes, bzw. Korrelationsfaktors in Abhängigkeit wenigstens einer Randbedingung.

7. Verfahren zum Erfassen entgangener Energie nach Anspruch 6, **dadurch gekennzeichnet, dass** ein bzw. der Korrelationsfaktor aus mehreren, abgespeicherten Korrelationsfaktoren ausgewählt wird, abhängig von

   - der aktuellen Windrichtung,
   - der aktuellen Windgeschwindigkeit,
   - der aktuellen Leistung der Referenz-Windenergieanlage,
   - der aktuellen Außentemperatur und/oder
   - der aktuellen Luftdichte.

8. Verfahren zum Erfassen entgangener Energie nach einem der Ansprüche 6 oder 7, **dadurch gekennzeichnet, dass** die wenigstens eine Referenz-Windenergieanlage abhängig der aktuell vorherrschenden Windrichtung ausgewählt wird und/oder dass mehre Windenergieanlagen als Referenz-Windenergieanlagen ausgewählt und verwendet werden um jeweils eine zu erwartende Leistung zu berechnen, so dass mehrere zu erwartende Leistungen berechnet werden, und eine zu erwartende mittlere Leistung aus den mehreren zu erwartenden Leistungen berechnet werden, insbesondere durch Mittelwertbildung oder über die Methode der kleinsten Fehlerquadrate.

9. Verfahren zum Erfassen entgangener Energie nach einem der Ansprüche 6 bis 8, **dadurch gekennzeichnet, dass** die aktuelle Windrichtung und/oder die aktuelle Windgeschwindigkeit an der Referenz-Windenergieanlage, an der ersten Windenergieanlage und/oder an einem anderen Messpunkt, insbesondere einem Messmast erfasst wird.

10. Verfahren zum Erfassen entgangener Energie nach einem der Ansprüche 6 bis 9, **dadurch gekennzeichnet, dass** wenigstens einer bzw. der wenigstens eine Korrelationsfaktor aus einer gemäß einem der Ansprüche 1 bis 5 erstellten Datenbank verwendet wird.

11. Windenergieanlage zum Wandeln kinetischer Energie aus dem Wind in elektrische Energie, umfassend eine Steuerung, die dazu vorbereitet ist, ein Verfahren nach einem der vorstehenden Ansprüche durchzuführen.

12. Windpark, umfassend mehrere Windenergieanlagen, und eine Steuerung, die dazu vorbereitet ist, für eine Windenergieanlage als erste Windenergieanlage und unter Berücksichtigung wenigstens einer weiteren Windenergieanlage des Windparks als Referenz-Windenergieanlage ein Verfahren nach einem der Ansprüche 1 bis 10 durchzuführen.

13. Windpark nach Anspruch 12, umfassend einen Messmast zum Erfassen von Umgebungsbedingungen, insbesondere zur Erfassen einer im Windpark vorherrschenden Windgeschwindigkeit.

14. Windpark nach Anspruch 12 oder 13, **dadurch gekennzeichnet, dass** die Steuerung in einer der Windenergieanlagen und/oder in einem bzw. dem Messmast vorgesehen ist und/oder dass die Steuerung dazu vorbereitet ist, wahlweise für jeweils jede Windenergieanlage des Windparks als erste Windenergieanlage die entgangene Energie zu berechnen.

**Claims**

1. A method of producing a data base which includes a plurality of correlation laws, in particular correlation factors, for determining lost energy, which during a stoppage or throttling of a first wind power installation cannot be converted thereby into electrical energy, from the recorded power of at least one reference wind power installation operated in throttled or unthrottled mode, comprising the steps:

   simultaneously detecting instantaneous power of the first wind power installation and at least one reference wind power installation in the throttled or unthrottled mode,
   determining a respective correlation law, in particular correlation factor, describing a relationship between the power of the first wind power installation and the power of the at least one reference wind power installation, and
   storing the at least one correlation law or correlation factor in dependence on at least one boundary condition.

2. A method of producing a data base according to claim 1 **characterised in that** the at least one boundary condition is selected from the list comprising:

   - the current wind direction,
   - the current wind speed, and
   - the current power of the reference wind power installation,

   and/or for the wind power installation, the reference wind power installation and/or for further wind power installations, the instantaneous power is stored in dependence on at least one boundary condition.

3. A method of producing a data base according to claim 2 **characterised in that**

   - the current wind direction,
   - the current wind speed, and/or
   - the current power of the reference wind power installation,

   is subdivided into discrete regions for use as a boundary condition.

4. A method of producing a data base according to one of the preceding claims **characterised in that** the correlation laws or correlation factors are recorded and stored in the regular mode in order thereby to successively fill the data base with the correlation factors and optionally and/or as required correlation laws or factors which are not yet determined by measurement are calculated, in particular interpolated or extrapolated.

5. A method of producing a data base according to one of the preceding claims **characterised in that** a respective set of correlation laws or of correlation factors is recorded for three or more wind power installations for different values or different combinations of values of one or more boundary conditions, wherein a respective correlation law or factor describes the correlation of two respective wind power installations thereof.

6. A method of detecting lost energy which because of stoppage or throttling of a first wind power installation cannot be converted into electric energy by said first wind power installation, comprising the steps:

- detecting the current power of at least one reference wind power installation in the throttled or unthrottled mode,
- calculating the power to be expected of the first wind power installation from the power of the at least one reference wind power installation and a previously recorded correlation law, in particular a previously recorded correlation factor, which for that operating point specifies a correlation between the power of the respective reference wind power installation and a power to be expected of the first wind power installation, and
- calculating the lost energy from the calculated power to be expected and an associated period of time, wherein

the previously recorded correlation law or the previously recorded correlation factor from a previously produced data base is used
the data base was produced by a method, which comprising the steps:

simultaneously detecting instantaneous power of the first wind power installation and at least one reference wind power installation in the throttled or unthrottled mode,
determining a respective correlation law, in particular correlation factor, describing a relationship between the power of the first wind power installation and the power of the at least one reference wind power installation, and
storing the at least one correlation law or correlation factor in dependence on at least one boundary condition.

7. A method of detecting lost energy according to claim 7 **characterised in that** a or the correlation factor is selected from a plurality of stored correlation factors in dependence on

- the current wind direction,
- the current wind speed, and/or
- the current power of the reference wind power installation.

8. A method of detecting lost energy according to one of claims 6 and 7 **characterised in that** the at least reference wind power installation is selected in dependence on the currently prevailing wind direction and/or a plurality of wind power installations are selected and used as reference wind power installations to respectively calculate a power to be expected so that a plurality of powers to be expected are calculated, and an average power to be expected is calculated from the plurality of powers to be expected, in particular by averaging or by way of the method of least error squares.

9. A method of detecting lost energy according to one of claims 6 to 8 **characterised in that** the current wind direction and/or the current wind speed is detected at the reference wind power installation, at the first wind power installation and/or at another measuring point, in particular a measuring mast.

10. A method of detecting lost energy according to one of claims 6 to 9 **characterised in that** at least one or the at least one correlation factor from a data base produced in accordance with one of claims 1 to 6 is used.

11. A wind power installation for converting kinetic energy from the wind into electric energy including a control adapted to carry out a method according to one of the preceding claims.

12. A wind farm comprising a plurality of wind power installations and a control adapted to carry out a method according to one of claims 1 to 10 for a wind power installation as a first wind power installation and having regard to at least one further wind power installation of the wind farm as a reference wind power installation.

**13.** A wind farm according to claim 12 comprising a measuring mast for detecting ambient conditions, in particular for detecting a wind speed prevailing in the wind farm.

**14.** A wind farm according to claim 12 or claim 13 **characterised in that** the control is provided in one of the wind power installations and/or in a or the measuring mast and/or the control is adapted to selectively calculate the lost energy for each respective wind power installation of the wind farm as the first wind power installation.

**Revendications**

**1.** Procédé pour élaborer une base de données, qui comprend plusieurs règles de corrélation, en particulier des facteurs de corrélation, afin de déterminer la perte d'énergie, qui ne peut pas être convertie, au cours d'un arrêt ou d'une restriction de capacité d'une première éolienne, en énergie électrique par cette dernière, à partir de la puissance absorbée d'au moins une éolienne de référence fonctionnant à capacité réduite ou non, comprenant les étapes suivantes consistant à :

détecter de manière simultanée la puissance instantanée de la première éolienne et au moins d'une éolienne de référence fonctionnant à capacité réduite ou non ;
déterminer respectivement une règle de corrélation, en particulier un facteur de corrélation, décrivant un lien entre la puissance de la première éolienne et la puissance de l'au moins une éolienne de référence ; et
sauvegarder l'au moins une règle de corrélation ou l'au moins un facteur de corrélation en fonction au moins d'une condition marginale.

**2.** Procédé pour élaborer une base de données selon la revendication 1, **caractérisé en ce que** l'au moins une condition marginale est choisie parmi la liste suivante comprenant

- le sens du vent instantané,
- la vitesse du vent instantanée,
- la puissance instantanée de l'éolienne de référence,
- la température extérieure instantanée, et
- l'étanchéité à l'air instantanée,

et/ou **en ce que** la puissance instantanée en fonction d'au moins une condition marginale est sauvegardée pour la première éolienne, pour l'éolienne de référence et/ou pour d'autres éoliennes.

**3.** Procédé pour élaborer une base de données selon la revendication 2, **caractérisé en ce que**

- le sens du vent instantané,
- la vitesse du vent instantanée,
- la puissance instantanée de l'éolienne de référence,
- la température extérieure instantanée, et/ou
- l'étanchéité à l'air instantanée

sont divisés en des plages discrètes aux fins de l'utilisation en tant que condition marginale.

**4.** Procédé pour établir une base de données selon l'une quelconque des revendications précédentes, **caractérisé en ce que** les règles de corrélation ou les facteurs de corrélation sont relevés et sauvegardés lors du fonctionnement régulier pour à cet effet renseigner la base de données de manière successive avec les facteurs de corrélation, et **en ce qu'**en option et/ou selon les besoins, des règles de corrélation ou des facteurs de corrélation qui n'ont pas encore été déterminés par une mesure sont calculés, en particulier sont interpolés ou extrapolés.

**5.** Procédé pour élaborer une base de données selon l'une quelconque des revendications précédentes, **caractérisé en ce que** respectivement un jeu de règles de corrélation ou un jeu de facteurs de corrélation pour trois éoliennes ou plus est relevé pour différentes valeurs ou différentes combinaisons de valeur d'une ou de plusieurs conditions marginales, dans lequel une règle de corrélation ou un facteur de corrélation décrit respectivement la corrélation respectivement de deux éoliennes.

**6.** Procédé pour détecter la perte d'énergie, qui ne peut être convertie, du fait de l'arrêt ou de la réduction de capacité d'une première éolienne, en énergie électrique par ladite première éolienne, comprenant les étapes suivantes consistant à :

- détecter la puissance instantanée d'au moins une éolienne de référence en fonctionnement à capacité réduite ou non,
- calculer la puissance attendue de la première éolienne à partir de la puissance de l'au moins une éolienne de référence et d'une règle de corrélation relevée au préalable, en particulier d'un facteur de corrélation relevé au préalable, lequel indique, pour ledit point de fonctionnement, une corrélation entre la puissance de l'éolienne de référence respective et une puissance attendue de la première éolienne, et
- calculer la perte d'énergie à partir de la puissance calculée attendue et d'un laps de temps associé, dans lequel

la règle de corrélation relevée au préalable ou le facteur de corrélation relevé au préalable issu(e) d'une base de données élaborée au préalable est utilisé(e), et la base de données a été élaborée par un procédé, qui comprend les étapes suivantes consistant à

détecter de manière simultanée la puissance instantanée de la première éolienne et au moins d'une éolienne de référence fonctionnant à capacité réduite ou non, déterminer respectivement une règle de corrélation, en particulier un facteur de corrélation, décrivant un lien entre la puissance de la première éolienne et la puissance de l'au moins une éolienne de référence, et sauvegarder l'au moins une règle de corrélation ou l'au moins un facteur de corrélation en fonction au moins d'une condition marginale.

7. Procédé pour détecter la perte d'énergie selon la revendication 6, **caractérisé en ce qu'**un ou le facteur de corrélation est choisi parmi les nombreux facteurs de corrélation sauvegardés, selon

- le sens du vent instantané,
- la vitesse du vent instantanée,
- la puissance instantanée de l'éolienne de référence,
- la température extérieure instantanée, et/ou
- l'étanchéité à l'air instantanée.

8. Procédé pour détecter la perte d'énergie selon l'une quelconque des revendications 6 ou 7, **caractérisé en ce que** l'au moins une éolienne de référence est choisie en fonction du sens du vent dominant de manière instantanée, et/ou **en ce que** plusieurs éoliennes sont choisies et utilisées en tant qu'éoliennes de référence afin de calculer respectivement une puissance attendue de sorte que plusieurs puissances attendues sont calculées, et **en ce qu'**une puissance moyenne attendue est calculée à partir des nombreuses puissances attendues, en particulier par l'obtention d'une valeur moyenne ou par l'intermédiaire de la méthode des moindres carrés.

9. Procédé pour détecter la perte d'énergie selon l'une quelconque des revendications 6 à 8, **caractérisé en ce que** le sens du vent instantané et/ou la vitesse du vent instantanée sont détectés sur l'éolienne de référence, sur la première éolienne et/ou sur un autre point de mesure, en particulier au niveau du mât de mesure.

10. Procédé pour détecter la perte d'énergie selon l'une quelconque des revendications 6 à 9, **caractérisé en ce qu'**au moins un ou l'au moins un facteur de corrélation issu d'une base de données élaborée selon l'une quelconque des revendications 1 à 5 est utilisé.

11. Eolienne pour convertir une énergie cinétique issue du vent en une énergie électrique, comprenant une commande, qui est préparée afin de mettre en oeuvre un procédé selon l'une quelconque des revendications précédentes.

12. Parc éolien, comprenant plusieurs éoliennes, et une commande qui est préparée afin de mettre en oeuvre un procédé selon l'une quelconque des revendications 1 à 10 pour une éolienne faisant office de première éolienne et en tenant compte au moins d'une autre éolienne du parc éolien faisant office d'éolienne de référence.

13. Parc éolien selon la revendication 12, comprenant un mât de mesure pour détecter des conditions environnantes, en particulier pour détecter une vitesse du vent dominante dans le parc éolien.

14. Parc éolien selon la revendication 12 ou 13, **caractérisé en ce que** la commande est prévue dans l'une des éoliennes et/ou dans l'un ou le mât de mesure, et/ou **en ce que** la commande est préparée afin de calculer la perte d'énergie au choix pour respectivement chaque éolienne du parc éolien faisant office de première éolienne.

Gondel

Nabe/Spinner

Windenergieanlage

Rotorblatt

Turm

**Fig. 1**

200 ⟶ Messen $P_i$ aller WEA

202 ⟶ $K_{ij} = \dfrac{P_i}{P_j}$

204 ⟶ Abspeichern $K_{ij}$ in Matrix

Wiederholen nach Zeit T ⟵ 206

# Fig. 2

**Fig. 3**

**EP 2 673 503 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20080079263 A1
- EP 2206917 A2